# EUROPÄISCHE PATENTSCHRIFT

(11) **EP 3 696 059 B1**
(45) Veröffentlichungstag und Bekanntmachung des Hinweises auf die Patenterteilung: **24.07.2024**
(21) Anmeldenummer: 20154765.0
(22) Anmeldetag: 31.01.2020
(51) Int. Cl.: B62D 21/12, B62D 27/06, B62D 63/02

(54) **FAHRZEUGKONSTRUKTION MIT ANSCHLUSSKNOTEN-HÜLSEN-SPANNELEMENT-VERBINDUNG**
VEHICLE STRUCTURE WITH CONNECTION NODE SLEEVE CLAMPING ELEMENT CONNECTION
CARROSSERIE DE VÉHICULE COMPRENANT DE LIAISON D'ÉLÉMENT DE SERRAGE MANCHES-N UDS DE RACCORDEMENT

(30) Priorität: 15.02.2019 DE 102019103861
(43) Veröffentlichungstag der Anmeldung: 19.08.2020
(73) Patentinhaber: MAN Truck & Bus SE, 80995 München (DE)
(72) Erfinder: Sattler, Steve, 80992 München (DE); Hintereder, Jürgen, 83313 Siegsdorf (DE); Kondic, Darko, 85757 Karlsfeld (DE); Burger, Norbert, 84030 Ergolding (DE); Haag, Jens, 85757 Karlsfeld (DE)
(74) Vertreter: v. Bezold & Partner Patentanwälte - PartG mbB

(56) Entgegenhaltungen:
- EP-A1- 3 597 515
- DE-A1- 10 016 883
- DE-A1- 3 718 841
- DE-U1- 202006 003 228

## Beschreibung

Die Erfindung betrifft eine Fahrzeugkonstruktion, vorzugsweise ein in seiner Längsrichtung z. B. tragstrukturell und/oder funktionell modular aufgebautes Fahrzeug-Chassis, insbesondere Nutzfahrzeug-Chassis.

Zum allgemeinen Stand der Technik kann zunächst auf die DE 37 18 841 A1, die DE 100 16 883 A1 und die DE 20 2006 003 228 U1 verwiesen werden, aus denen bereits Fahrzeugkonstruktionen mit mehreren Tragstrukturen bekannt sind.

Im Stand der Technik sind sogenannte leiterrahmenförmige Nutzfahrzeug-Chassis mit zwei in Querrichtung voneinander beabstandeten einstückig-integral durchgängigen Längsträgern bekannt.

Derartige Nutzfahrzeug-Chassis werden in Abhängigkeit der Fahrzeuganwendung (z. B. Sattelzugmaschine, Kipper-Lastkraftwagen, etc.) konstruiert und weisen deshalb in Abhängigkeit der Fahrzeuganwendung z. B. unterschiedliche Längen, Breiten, Stärken, etc. auf. An die Nutzfahrzeug-Chassis sind ebenfalls in Abhängigkeit der Fahrzeuganwendung Funktionskomponenten (z. B. verschiedene Tanks, Motoren, Batterien, etc.) anmontiert. Einmal definiert und produziert bleibt das jeweilige Nutzfahrzeug-Chassis mitsamt seinen anmontierten Funktionskomponenten im Laufe der Fahrzeuglebensdauer üblicherweise unverändert bestehen. Nachträgliche Veränderungen sind, wenn überhaupt, nur mit erheblichem Umbau- und Anpassungsaufwand zu realisieren und führen zugleich meist zu einem Eingriff in die Fahrzeugstatik.

Die Anordnung der Funktionskomponenten am Nutzfahrzeug-Chassis wird vom zur Verfügung stehenden Raum beeinflusst. Dadurch ergeben sich Zwänge hinsichtlich der Anordnung von insbesondere großen Funktionskomponenten, deren technische Lösung meist in einer Stückelung der großen Funktionskomponenten besteht, z. B. die Stückelung eines großen Tanks in mehrere kleinere Tanks, wozu oftmals auch varianztreibende Adapterlösung erforderlich sind.

Ein modular aufgebautes Fahrzeug-Chassis, dessen Tragstrukturen lösbar und folglich austauschbar miteinander verbunden sind, wäre demgegenüber deutlich flexibler.

Eine Aufgabe der Erfindung ist es, eine geeignete Verbindungsmöglichkeit für vorzugsweise Fahrzeug-Chassis-Module bildende Tragstrukturen für eine Fahrzeugkonstruktion zu schaffen.

Diese Aufgabe wird mit den Merkmalen des Hauptanspruchs gelöst. Vorteilhafte Weiterbildungen sind in den Unteransprüchen offenbart oder ergeben sich aus der folgenden Beschreibung bevorzugter Ausführungsformen der Erfindung.

Die Erfindung schafft eine Fahrzeugkonstruktion, vorzugsweise ein in seiner Längsrichtung z. B. tragstrukturell und/oder funktionell modular aufgebautes Fahrzeug-Chassis, insbesondere Nutzfahrzeug-Chassis, z. B. Lastkraftwagen- oder Transporter-Chassis.

Die Fahrzeugkonstruktion weist zumindest zwei z. B. Fahrzeug-Chassis-Module bildende Tragstrukturen auf, die jeweils zumindest einen Anschlussknoten umfassen.

Die Fahrzeugkonstruktion zeichnet sich vor allem dadurch aus, dass die Tragstrukturen benachbarte Anschlussknoten umfassen und die benachbarten Anschlussknoten über zumindest eine Verbindungskonstruktion vorzugsweise lösbar miteinander verbunden sind und die Verbindungskonstruktion zwei miteinander verbundene Hülsen aufweist, und ein im Wesentlichen in Längsrichtung der Fahrzeugkonstruktion erstreckendes Spannelement (z. B. eine Spannschraube) aufweist.

Die Tragstrukturen sind vorzugsweise über mehrere, vorzugsweise vier, Anschlussknoten-Paare lösbar und/oder tragstrukturell miteinander verbunden.

Es können alle vier oder nur einige der vier Anschlussknoten-Paare, z. B. nur zwei der Anschlussknoten-Paare, mit der Verbindungskonstruktion wie hierin offenbart verbunden sein. Es ist also möglich, dass zwei Tragstrukturen über unterschiedliche Anschlussknoten und/oder unterschiedliche Anschlussknoten-Verbindungen lösbar miteinander verbunden sind.

Die Hülse oder die miteinander verbundenen Hülsen können jeweils z. B. gedreht oder gegossen sein.

Es ist möglich, dass die miteinander verbundenen Hülsen z. B. einen Form- und/oder Reibschluss miteinander bilden, z. B. einen Formschluss im Wesentlichen in Höhenrichtung der Fahrzeugkonstruktion und/oder einen Reibschluss in Längsrichtung der Hülsen.

Die Hülse oder die miteinander verbundenen Hülsen können zweckmäßig einen Formschluss z. B. im Wesentlichen in Höhenrichtung der Fahrzeugkonstruktion zwischen den benachbarten Anschlussknoten bilden. Dadurch können z. B. auf- und abwärts gerichtete Kräfte, insbesondere Schubkräfte, im Wesentlichen in Höhenrichtung der Fahrzeugkonstruktion vorzugsweise formschlüssig über die benachbarten Anschlussknoten mittels der miteinander verbundenen Hülsen übertragen werden.

Denkbar ist auch, dass die Hülse oder die Hülsen nur mit dem Anschlussknoten einen Formschluss eingehen.

Die benachbarten Anschlussknoten können z. B. jeweils zumindest eine Aussparung aufweisen, in die jeweils eine der miteinander verbunden Hülsen eingesetzt ist, insbesondere eingepresst (z. B. eingeschlagen) ist.

Es ist möglich, dass z. B. eine der miteinander verbundenen Hülsen abschnittsweise in beiden benachbarten Anschlussknoten angeordnet ist, oder z. B. beide der miteinander verbundenen Hülsen abschnittsweise in beiden benachbarten Anschlussknoten angeordnet sind.

Es ist möglich, dass die miteinander verbundenen Hülsen sich abschnittsweise überlappen, im Wesentlichen koaxial angeordnet sind und/oder ineinander gesteckt (zweckmäßig lose ineinander eingesetzt oder ineinander eingepresst) sind.

Vorzugsweise ist auch z. B. eine zumindest abschnittsweise Überlappung zwischen der Hülse und den Anschlussknoten möglich.

Das Spannelement (z. B. eine Spannschraube) erstreckt sich durch die miteinander verbundenen Hülsen.

Das Spannelement beaufschlagt die benachbarten Anschlussknoten zueinander hin und/oder im Wesentlichen in Längsrichtung der Fahrzeugkonstruktion.

Das Spannelement, die Hülse und/oder die miteinander verbundenen Hülsen können sich z. B. im Wesentlichen in Längsrichtung der Fahrzeugstruktur erstrecken.

Die benachbarten Anschlussknoten können z. B. über zumindest zwei insbesondere wie hierin offenbarte Verbindungskonstruktionen miteinander verbunden sein, die z. B. in Querrichtung der Fahrzeugkonstruktion und/oder in Höhenrichtung der Fahrzeugkonstruktion voneinander beabstandet sein können.

Es ist möglich, dass die Fahrzeugkonstruktion sich im Einsatz (insbesondere im Fahrbetrieb) in deren Höhenrichtung auf- und ab-bewegt, wodurch Zug- und Druckkräfte und Schubkräfte erzeugt werden können.

Bei einer Ausführungsform der Erfindung kann das Spannelement tragstrukturell zur Übertragung von im Einsatz der Fahrzeugkonstruktion erzeugten Zugkräften dienen, z. B. im Wesentlichen in Längsrichtung der Fahrzeugkonstruktion. Alternativ oder ergänzend können die benachbarten Anschlussknoten z. B. innenliegende Stirnseiten aufweisen und die innenliegenden Stirnseiten können tragstrukturell miteinander in Verbindung gebracht werden, zur Übertragung von im Einsatz der Fahrzeugkonstruktion erzeugten Druckkräften, z. B. im Wesentlichen in Längsrichtung der Fahrzeugkonstruktion.

Auf- und abwärts gerichtete Kräfte, insbesondere Schubkräfte, in Höhenrichtung der Fahrzeugkonstruktion können wie schon zuvor erwähnt z. B. über die Hülse oder die miteinander verbundenen Hülsen z. B. formschlüssig übertragen werden.

Die benachbarten Anschlussknoten können jeweils zumindest eine Anschlusseinrichtung zum Anschließen z. B. eines Längsträgersegments, eines Querträgersegments und/oder eines Vertikalträgersegments aufweisen.

Die Anschlusseinrichtung kann z. B. eine im Wesentlichen U- oder C-förmige Anschlussfläche aufweisen und zwar insbesondere zur z. B. passgenauen Anlage des Längsträgersegments, des Querträgersegments und/oder des Vertikalträgersegments. Dabei ist es z. B. möglich, dass die Anschlusseinrichtung dazu dient, das Längsträgersegment, das Querträgersegments und/oder das Vertikalträgersegment von innen zu halten.

Es ist möglich, dass die Tragstrukturen jeweils ein Fahrzeug-Chassis-Modul/Fahrgestell bilden.

Es ist möglich, dass die Längsträgersegmente der Tragstrukturen über benachbarte Anschlussknoten miteinander verbunden sind und in Querrichtung der Fahrzeugkonstruktion voneinander beabstandete Chassis-Längsträgerkonstruktionen bilden.

Im Kontext der Erfindung können somit insbesondere Zug- und/oder Druckkräfte in den Längsträgersegmenten über die benachbarten Anschlussknoten vorteilhaft übertragen werden.

Es ist möglich, dass die Tragstrukturen jeweils beidseitig zwei in Höhenrichtung der Fahrzeugkonstruktion voneinander beabstandete Längsträgersegmente aufweisen, und/oder beidseitig zwei in Längsrichtung der Fahrzeugkonstruktion voneinander beabstandete Vertikalträgersegmente aufweisen. Alternativ oder ergänzend kann zumindest eine der Tragstrukturen auch z. B. diagonal verlaufende Trägersegmente aufweisen.

Die jeweilige Tragstruktur kann z. B. zumindest einen, vorzugsweise zumindest zwei in Längsrichtung der Fahrzeugkonstruktion voneinander beabstandete Querträgersegmente (z. B. eine oder mehrere Schubaussteifungen, Ringspanten und/oder Schubbleche) aufweisen, vorzugsweise zwei obere in Längsrichtung der Fahrzeugkonstruktion voneinander beabstandete Querträgersegmente und/oder zwei untere in Längsrichtung der Fahrzeugkonstruktion voneinander beabstandete Querträgersegmente.

Die benachbarten Anschlussknoten können zweckmäßig z. B. lösbar oder unlösbar miteinander verbunden sein und/oder jeweils ein Anschlussknoten-Paar bilden.

Es ist möglich, dass die benachbarten Anschlussknoten jeweils zur (vorzugsweise lösbaren und/oder wiederholt montierbaren Verbindung oder unlösbaren Verbindung) mit jeweils einem Längsträgersegment, einem Querträgersegment und/oder einem Vertikalträgersegment der jeweiligen Tragstruktur dienen. Auch hier können alternativ oder ergänzend z. B. diagonal verlaufende Trägersegmente zum Einsatz kommen.

Es ist möglich, dass benachbarte Anschlussknoten in Längsrichtung der Fahrzeugkonstruktion auf Stoß aneinander anliegen, und/oder über jeweils eine im Wesentlichen in Höhen- und in Querrichtung der Fahrzeugkonstruktion ausgerichtete Schnittebene voneinander trennbar sind.

Die jeweilige Tragstruktur kann z. B. vier vordere Anschlussknoten und vier hintere Anschlussknoten aufweisen, wobei die vier vorderen Anschlussknoten und die vier hinteren Anschlussknoten z. B. Eckpunkte der jeweiligen Tragstruktur bilden können.

Es ist möglich, dass die jeweilige Tragstruktur als (z. B. im Wesentlichen quaderförmige) Gitter- oder Geripperahmenkonstruktion ausgebildet ist.

Die Tragstrukturen sind vorzugsweise selbstragend ausgebildet (und insbesondere entsprechend ihrer Aufgabe in der Gesamttragstruktur dimensioniert).

Die Tragstrukturen können vorzugsweise mit z. B. unterschiedlichen Funktionskomponenten ausgestattet sein (z. B. einer oder mehreren Batterien, Energiespeichersystemen (z. B. Wasserstofftanks oder Gastanks), Traktionsbatterien, Druckluft-Tanks, Kraftstoff-Tanks, Reduktionsmittel-Tanks, Motoren, Steuerungseinrichtungen, Pumpen- und/oder Kühlsystemen, Beladungs- und/oder Betankungssystemen, und/oder Luftaufbereitungsystemen (z. B. Luftpresser) etc.).

Die Fahrzeugkonstruktion ist vorzugsweise modular, insbesondere modulbaukastenartig, umkonfigurierbar, insbesondere auch nach der ursprünglichen Endmontage der Fahrzeugkonstruktion.

Zu erwähnen ist, dass die hierin erwähnte "lösbare Verbindung" vorzugsweise ausgeführt sein kann, so dass die lösbar miteinander verbundenen Teile insbesondere wiederholt montierbar sind, also z. B. mehrfach voneinander getrennt und wieder aneinander montiert werden können.

Zu erwähnen ist noch, dass die Längsrichtung der Fahrzeugkonstruktion im Kontext der Erfindung z. B. im Wesentlichen parallel zur Mittelachse der Fahrzeugkonstruktion verlaufen kann und/oder z. B. durch die Längserstreckung der Längsträgersegmente definiert werden kann.

Die Längsträgersegmente können z. B. mit einer Abweichung im Bereich von max. ungefähr +/-35, +/-25°, +/-10° oder +/-5° schräg zur Mittelachse der Fahrzeugkonstruktion verlaufen.

Die Querrichtung und/oder Höhenrichtung der Fahrzeugkonstruktion kann zweckmäßig im Wesentlichen rechtwinklig (z. B. mit einer Abweichung im Bereich von max. ungefähr +/-35, +/-25°, +/-10° oder +/-5°) zur Mittelachse der Fahrzeugkonstruktion ausgerichtet sein.

Die Verbindungskonstruktion im Kontext der Erfindung kann z. B. zweckmäßig eine einzige Hülse oder zwei miteinander verbundene Hülsen umfassen.

Die benachbarten Anschlussknoten können jeweils z. B. als ein Blechteil oder ein Guss-, Schmiede- oder Frästeil ausgebildet sein und folglich vorzugsweise mittels eines Guss-, Schmiede- oder Fräsverfahrens hergestellt sein.

Es können alle vier oder nur einige der vier Anschlussknoten-Paare, z. B. nur zwei der Anschlussknoten-Paare, mit der Klemmverbindung wie hierin offenbart verbunden sein. Es ist also möglich, dass zwei Tragstrukturen über unterschiedliche Anschlussknoten und/oder unterschiedliche Anschlussknoten-Verbindungen lösbar miteinander verbunden sind.

Die Erfindung umfasst auch ein Gesamtfahrzeug z. B. in Form eines Nutzfahrzeugs, vorzugsweise ein Lastkraftwagen (z. B. Sattelzugmaschine oder Transporter), mit einer Fahrzeugkonstruktion wie hierin offenbart.

Die zuvor beschriebenen bevorzugten Ausführungsformen und Merkmale der Erfindung sind beliebig miteinander kombinierbar. Andere vorteilhafte Weiterbildungen der Erfindung sind in den Unteransprüchen offenbart oder ergeben sich aus der nachstehenden Beschreibung bevorzugter Ausführungsformen der Erfindung in Verbindung mit den beigefügten Figuren.
- Figur 1: zeigt eine perspektivische Explosionsdarstellung einer Fahrzeugkonstruktion gemäß einer Ausführungsform der Erfindung,
- Figur 2: zeigt eine perspektivische Darstellung der Fahrzeugkonstruktion der Figur 1 in zusammengebautem Zustand,
- Figur 3: zeigt eine vergrößerte Darstellung der Fahrzeugkonstruktion der Figuren 1 und 2,
- Figuren 4 bis 6: zeigen vergrößerte Darstellungen der Fahrzeugkonstruktion der Figuren 1 bis 3,
- Figur 7: zeigt eine perspektivische Explosionsdarstellung einer Fahrzeugkonstruktion gemäß einer anderen Ausführungsform der Erfindung,
- Figur 8: zeigt ein Anschlussknoten-Konzept gemäß einer Ausführungsform der Erfindung, und
- Figur 9: zeigt eine Schnittansicht des Anschlussknoten-Konzepts der Figur 8.

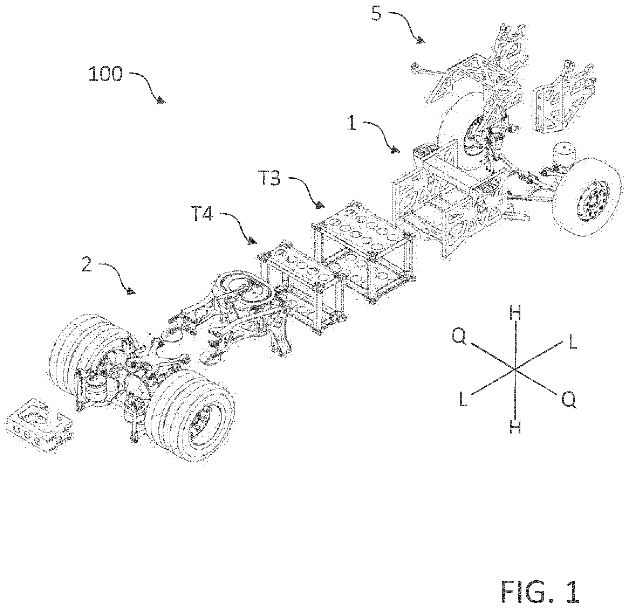

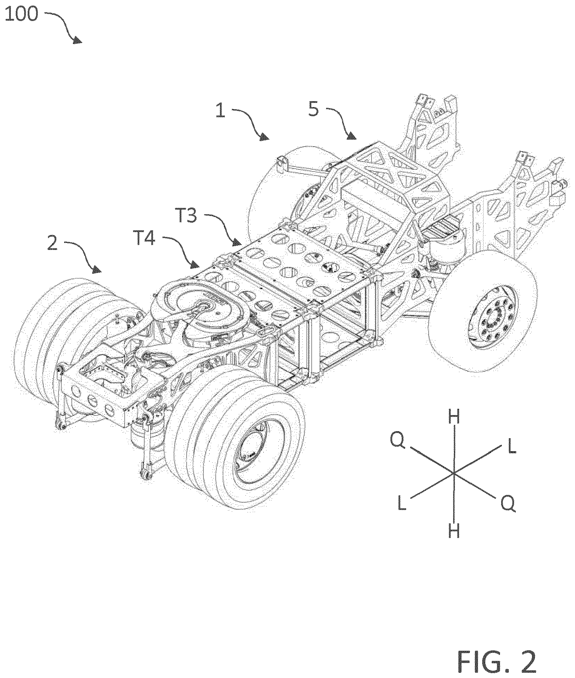

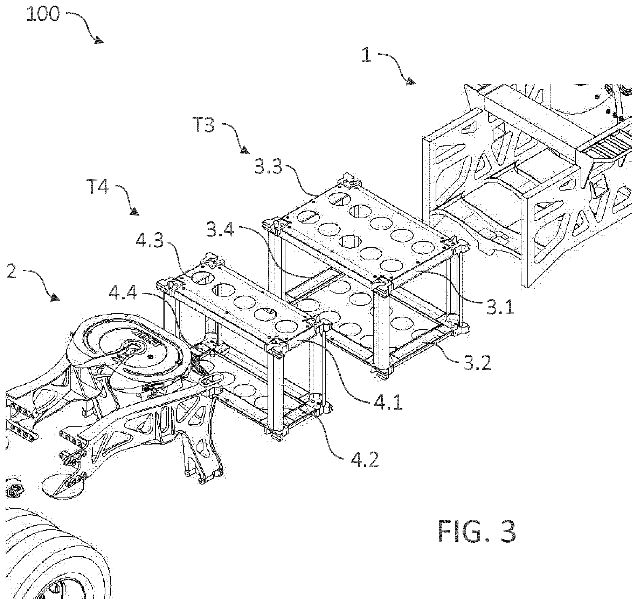

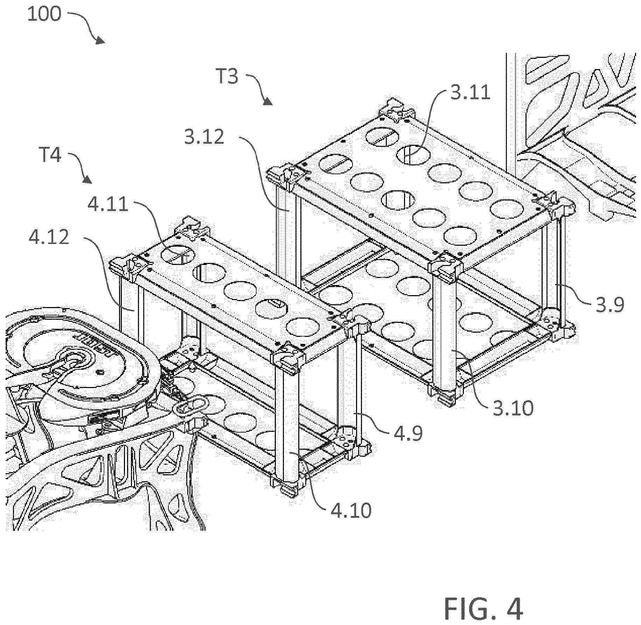

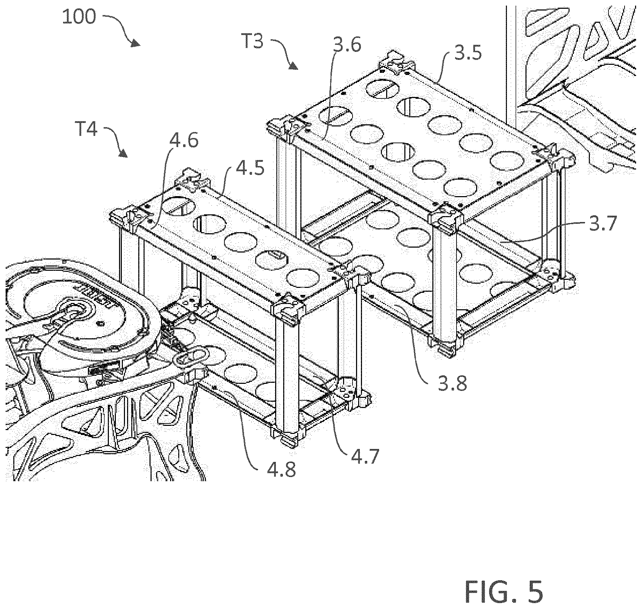

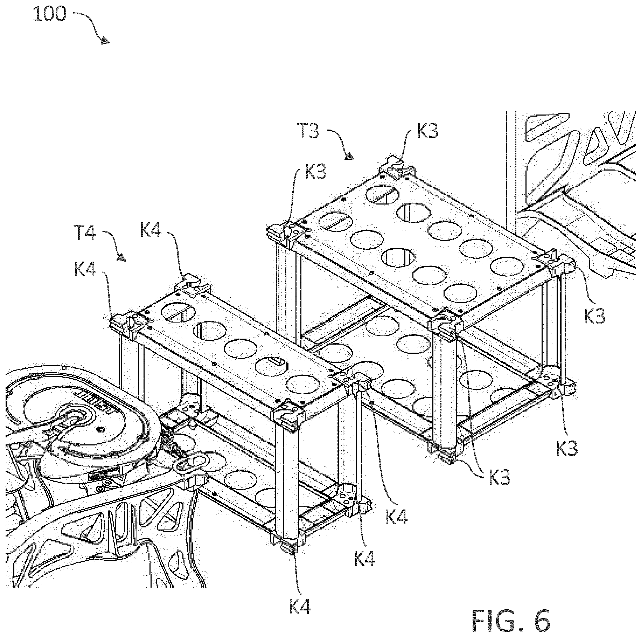

Eine beispielhafte Fahrzeugkonstruktion 100 gemäß einer Ausführungsform der Erfindung wird nachfolgend unter Bezugnahme auf die Figuren 1 bis 6 beschrieben. Der Übersichtlichkeit halber sind nicht alle Teile in allen Figuren mit Bezugszeichen versehen.

Die Fahrzeugkonstruktion 100 ist als ein in seiner Längsrichtung L tragstrukturell und vorzugsweise funktionell modular aufgebautes Fahrzeug-Chassis für ein Gesamtfahrzeug in Form eines Nutzfahrzeugs, insbesondere einer Sattelzugmaschine, ausgeführt.

Die Fahrzeugkonstruktion 100 kann z. B. ein mit Rädern versehenes Vorderachsmodul 1 und ein z. B. mit einer Zwillingsbereifung versehenes Hinterachsmodul 2 umfassen. Auf das Vorderachsmodul 1 kann ein optionales Modul 5 zur Aufnahme einer Nutzfahrzeug-Kabine aufgesetzt sein. Das Vorderachsmodul 1 umfasst eine Fahrzeug-Vorderachse und das Hinterachsmodul 2 umfasst eine Fahrzeug-Hinterachse.

Zwischen dem Vorderachsmodul 1 und dem Hinterachsmodul 2 sind zwei in Längsrichtung L der Fahrzeugkonstruktion 100 benachbarte Tragstrukturen T3, T4 angeordnet, nämlich beispielhaft eine erste Tragstruktur T3 und eine zweite Tragstruktur T4, wobei im Kontext der Erfindung die Tragstrukturen T3, T4 alternativ oder ergänzend auch an anderer Stelle positioniert sein können. Die Tragstrukturen T3, T4 bilden jeweils ein Fahrzeug-Chassis-Modul.

Die Tragstruktur T3 umfasst in Querrichtung Q der Fahrzeugkonstruktion 100 voneinander beabstandete Längsträgersegmente 3.1 bis 3.4, wobei die Längsträgersegmente 3.1 bis 3.4 in Querrichtung Q der Fahrzeugkonstruktion 100 voneinander beabstandete Chassis-Längsträgerkonstruktionen bilden.

Die Tragstruktur T4 umfasst ebenfalls in Querrichtung Q der Fahrzeugkonstruktion 100 voneinander beabstandete Längsträgersegmente 4.1 bis 4.4, wobei die Längsträgersegmente 4.1 bis 4.4 in Querrichtung Q der Fahrzeugkonstruktion 100 voneinander beabstandete Chassis-Längsträgerkonstruktionen bilden.

Die zwei Chassis-Längsträgerkonstruktionen der Fahrzeugkonstruktion 100 sind somit z. B. nicht einstückig-integral durchlaufend vom Vorderachsmodul 1 zum Hinterachsmodul 2, sondern in Längsrichtung L der Fahrzeugkonstruktion 100 gestückelt ausgebildet.

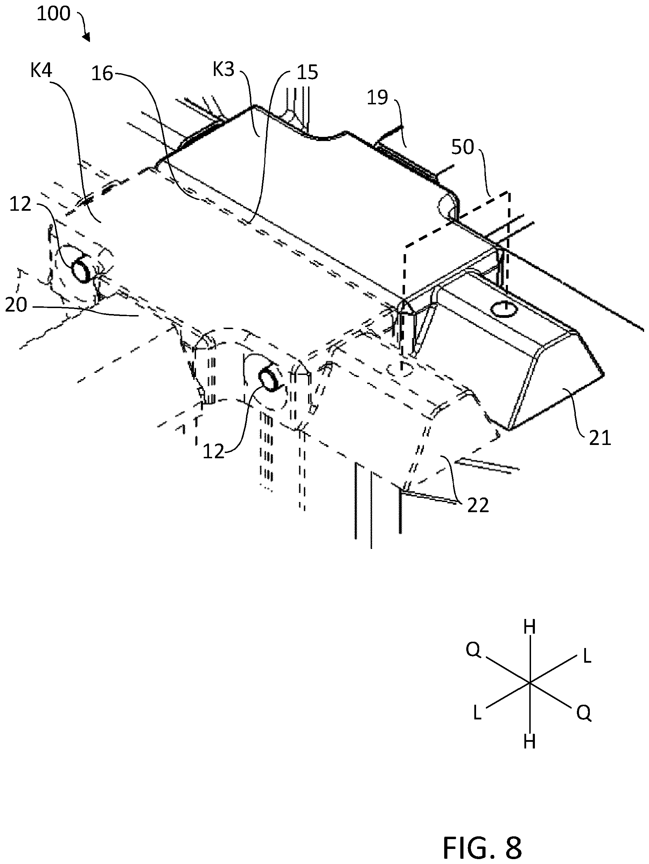

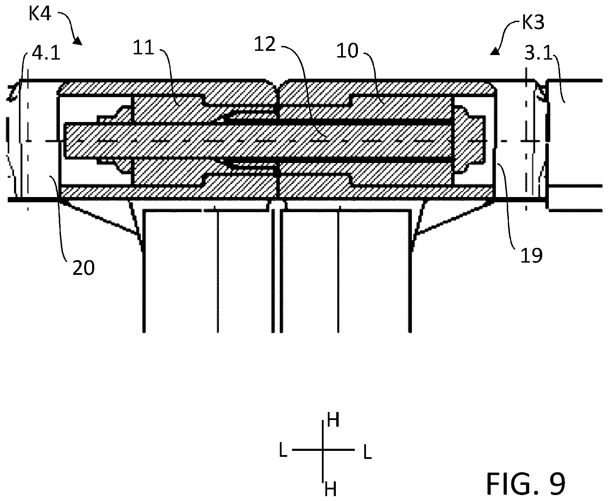

Die Tragstruktur T3 umfasst z. B. acht Anschlussknoten K3 und die Tragstruktur K4 umfasst z. B. acht Anschlussknoten K4. Alle oder zumindest einige der Anschlussknoten K3 und K4 können insbesondere wie in den Figuren 8 und 9 gezeigt ausgeführt sein.

Die Tragstruktur T3 umfasst insbesondere beidseitig zwei in Höhenrichtung H der Fahrzeugkonstruktion 100 voneinander beabstandete Längsträgersegmente 3.1 bis 3.4 und beidseitig zwei in Längsrichtung L der Fahrzeugkonstruktion 100 voneinander beabstandete Vertikalträgersegmente 3.9 bis 3.12 und zusätzlich zwei obere in Längsrichtung L der Fahrzeugkonstruktion 100 voneinander beabstandete Querträgersegmente 3.5 bis 3.6 und zwei untere in Längsrichtung L der Fahrzeugkonstruktion 100 voneinander beabstandete Querträgersegmente 3.7 bis 3.8. Die erste Tragstruktur T3 nimmt dadurch eine im Wesentlichen quaderförmige Gestalt an.

Die Tragstruktur T3 umfasst insbesondere vier vordere Anschlussknoten und vier hintere Anschlussknoten, die einheitlich mit dem Bezugszeichen K3 versehen sind. Die Anschlussknoten K3 dienen zur zweckmäßig lösbaren oder unlösbaren Verbindung mit jeweils einem Längsträgersegment 3.1 bis 3.4 und optional einem Querträgersegment 3.5 bis 3.8 und/oder einem Vertikalträgersegment 3.9 bis 3.12.

Die Tragstruktur T4 umfasst ebenfalls beidseitig zwei in Höhenrichtung H der Fahrzeugkonstruktion 100 voneinander beabstandete Längsträgersegmente 4.1 bis 4.4 und beidseitig zwei in Längsrichtung L der Fahrzeugkonstruktion 100 voneinander beabstandete Vertikalträgersegmente 4.9 bis 4.12 und zusätzlich zwei obere in Längsrichtung L der Fahrzeugkonstruktion 100 voneinander beabstandete Querträgersegmente 4.5 bis 4.6 und zwei untere in Längsrichtung L der Fahrzeugkonstruktion 100 voneinander beabstandete Querträgersegmente 4.7 bis 4.8. Die zweite Tragstruktur T4 nimmt dadurch eine im Wesentlichen quaderförmige Gestalt an.

Die Tragstruktur T4 umfasst darüber hinaus zweckmäßig vier vordere Anschlussknoten und zweckmäßig vier hintere Anschlussknoten, die einheitlich mit dem Bezugszeichen K4 versehen sind. Die Anschlussknoten K4 dienen zur zweckmäßig lösbaren oder unlösbaren Verbindung mit jeweils einem Längsträgersegment 4.1 bis 4.4 und optional einem Querträgersegment 4.5 bis 4.8 und/oder einem Vertikalträgersegment 4.9 bis 4.12.

Benachbarte Anschlussknoten K3, K4 der ersten Tragstruktur T3 und der zweiten Tragstruktur T4 (in den in den Figuren 1 bis 7 gezeigten Ausführungsformen vier Anschlussknoten-Paare) sind lösbar aneinander montiert und dienen somit zusätzlich dazu, die erste Tragstruktur T3 lösbar mit der zweiten Tragstruktur T4 zu verbinden.

Die Längsträgersegmente 3.1 bis 3.4 der ersten Tragstruktur T3 und die Längsträgersegmente 4.1 bis 4.4 der zweiten Tragstruktur T4 sind folglich über z. B. vier Anschlussknoten-Paare in Längsrichtung L der Fahrzeugkonstruktion 100 lösbar und vorzugsweise tragstrukturell miteinander verknüpft.

Auch das Vorderachsmodul 1 kann über Anschlussknoten-Paare mit der Tragstruktur T3 verbunden sein, während das Hinterachsmodul 2 über Anschlussknoten-Paare mit der Tragstruktur T4 verbunden sein kann.

Benachbarte Anschlussknoten und somit Anschlussknoten-Paare K3, K4 liegen zweckmäßig im Wesentlichen in Längsrichtung L der Fahrzeugkonstruktion 100 auf Stoß aneinander an und/oder sind über jeweils eine im Wesentlichen in Höhen- und in Querrichtung H und Q der Fahrzeugkonstruktion 100 ausgerichtete Schnittebene voneinander trennbar.

Die erste Tragstruktur T3 umfasst optional eine obere Platte und eine untere Platte z. B. zum Tragen von Funktionskomponenten und/oder zur Aussteifung der Tragstruktur T3, wobei die zweite Tragstruktur T4 ebenfalls optional eine obere Platte und eine untere Platte z. B. zum Tragen von Funktionskomponenten und/oder zur Aussteifung der Tragstruktur T4 umfasst.

Im Bedarfsfall können nachträglich eine oder mehrere der hierin offenbarten Tragstrukturen T3 und T4 ausgetauscht werden und somit das Anwendungsprofil des Gesamtfahrzeugs im Laufe der Fahrzeuglebensdauer relativ einfach verändert werden.

Sämtliche spezifischen Funktionskomponenten können z. B. innerhalb der jeweiligen Tragstruktur T3, T4 abgebildet werden. Beispielsweise können alle Funktionskomponenten zur Luftaufbereitung in einem Technikmodul (z. B. Tragstruktur T3) zusammengefasst werden, wohingegen z. B alle Funktionskomponenten einer Traktionsbatterie in einem Energiemodul (z. B. Tragstruktur T4) zusammengefasst werden können. Werden im Laufe des Produktlebenszyklus Funktionskomponenten verändert, hinzugefügt oder eliminiert, reduziert sich z. B. der Dokumentationsaufwand nur auf die jeweilige Tragstruktur T3, T4, ohne auf die Gesamtfahrzeug-Dokumentation Bezug nehmen zu müssen.

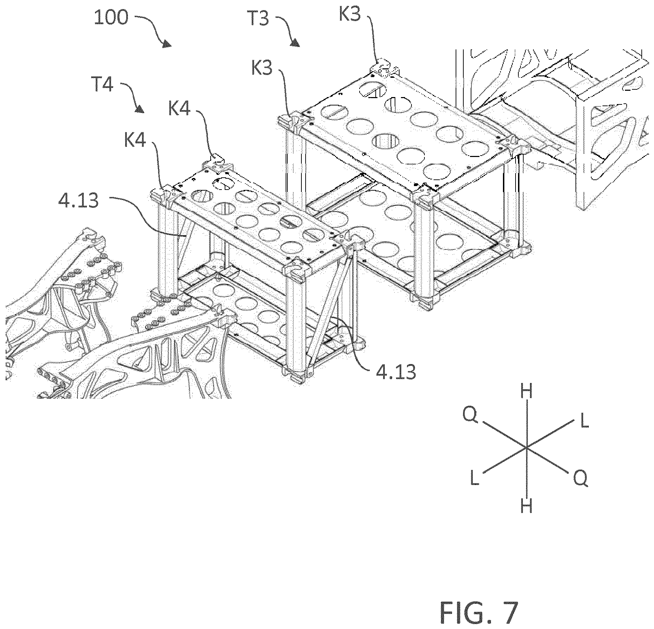

Figur 7 zeigt eine beispielhafte Fahrzeugkonstruktion 100 gemäß einer Ausführungsform der Erfindung, die im Wesentlichen der Ausführungsform der Figuren 1 bis 6 entsprechen kann.

Eine Besonderheit ist aber, dass die Tragstruktur T4 zwei in jeweils einer im Wesentlichen vertikalen Ebene ausgerichtete Diagonalverstrebungen 4.13 zur Aussteifung der Tragstruktur T4 umfasst, wobei sich die jeweilige vertikale Ebene in Längsrichtung L der Fahrzeugkonstruktion 100 erstreckt. Alternativ oder ergänzend zu den Diagonalverstrebungen 4.13 können Platten verwendet werden. Die Tragstruktur T3 kann ebenfalls derartige Diagonalverstrebungen und/oder Platten umfassen, sofern erforderlich.

Die hierhin erwähnten Platten und/oder Diagonalverstrebungen dienen vorzugsweise zur Erhöhung insbesondere der Torsionssteifigkeit der zugehörigen Tragstruktur T3, T4 und können z. B. in seitlicher Anordnung zumindest einen Teil einer Seitencrasheinrichtung zum Schutz der Funktionskomponenten vor einem Seitenaufprall bilden.

Die Figuren 8 und 9 zeigen unterschiedliche Ansichten eines Anschlussknoten-Konzepts gemäß einer Ausführungsform der Erfindung, gemäß dessen zumindest einige der unter Bezugnahme auf die Figuren 1 bis 7 beschriebenen Anschlussknoten K3 und K4 vorzugsweise ausgeführt werden können. Das Anschlussknoten-Konzept wird nachfolgend unter gemeinsamer Bezugnahme auf die Figuren 8 und 9 beschrieben.

Die Figuren 8 und 9 zeigen insbesondere benachbarte Anschlussknoten, nämlich einen Anschlussknoten K3 einer Tragstruktur T3 und einen Anschlussknoten K4 einer Tragstruktur T4. Die benachbarten Anschlussknoten K3, K4 bilden ein Anschlussknoten-Paar.

Die benachbarten Anschlussknoten K3, K4 sind über zwei vorzugsweise im Wesentlichen baugleiche Verbindungskonstruktionen miteinander verbunden, so dass im Folgenden nur eine Verbindungskonstruktion beschrieben wird, die andere aber baugleich ausgeführt sein kann.

Die Verbindungskonstruktion umfasst miteinander verbundene Hülsen 10 und 11 und alternativ oder ergänzend ein sich im Wesentlichen in Längsrichtung L der Fahrzeugkonstruktion 100 erstreckendes Spannelement 12, z. B. eine Spannschraube. Es sind allerdings auch Ausführungsformen möglich, bei denen die zwei Hülsen 10, 11 durch eine einzige Hülse ersetzt werden können.

Die miteinander verbundenen Hülsen 10, 11 bilden einen Form- und/oder Reibschluss miteinander aus.

Des Weiteren bilden die miteinander verbundenen Hülsen 10, 11 einen Formschluss zwischen den benachbarten Anschlussknoten K3, K4 im Wesentlichen in Höhenrichtung H.

Die benachbarten Anschlussknoten K3, K4 umfassen jeweils eine Aussparung, in die jeweils eine der miteinander verbunden Hülsen 10, 11 zweckmäßig eingesetzt, insbesondere eingepresst (z. B. eingeschlagen) ist.

Die miteinander verbundenen Hülsen 10, 11 überlappen sich im Schnittbereich der benachbarten Anschlussknoten K3, K4, sind koaxial angeordnet, und ineinander gesteckt (z. B. lose oder ineinander gepresst).

In der gezeigten Ausführungsform ist die Hülse 10 abschnittsweise z. B. in beiden benachbarten Anschlussknoten K3, K4 angeordnet. Alternativ ist es z. B. auch möglich, dass die Hülse 11 in den benachbarten Anschlussknoten abschnittsweise angeordnet wird.

Das Spannelement 12 erstreckt sich im Wesentlichen in Längsrichtung L der Fahrzeugkonstruktion 100 durch die miteinander verbundenen Hülsen 10, 11 und beaufschlagt die benachbarten Anschlussknoten K3, K4 zueinander hin und somit insbesondere in Längsrichtung L der Fahrzeugkonstruktion 100 zueinander hin.

Der Anschlussknoten K3 umfasst eine Anschlusseinrichtung 19 zum Anschließen eines Längsträgersegments. Der Anschlussknoten K3 umfasst ferner eine Anschlusseinrichtung zum Anschließen eines Vertikalträgersegments und kann optional eine Anschlusseinrichtung zum Anschließen eines Querträgersegments aufweisen.

Der Anschlussknoten K4 umfasst ebenfalls eine Anschlusseinrichtung 20 zum Anschließen eines Längsträgersegments. Der Anschlussknoten K4 umfasst ferner eine Anschlusseinrichtung zum Anschließen Vertikalträgersegments und kann optional eine Anschlusseinrichtung zum Anschließen eines Querträgersegments aufweisen.

Der Anschlussknoten K3 kann darüber hinaus z. B. zumindest eine Anbindungsstruktur 21 (z. B. Befestigungslöcher, Laschen, Konsolen etc.) zur Anbindung zumindest einer in Figur 8 nur schematisch dargestellten Montagestruktur 50 aufweisen. Ebenso kann der Anschlussknoten K4 z. B. zumindest eine Anbindungsstruktur 22 (z. B. Befestigungslöcher, Laschen, Konsolen etc.) zur Anbindung zumindest einer Montagestruktur 50 aufweisen.

Die Montagestruktur 50 kann z. B. Teil eines Fahrzeugaufbaus, Teil einer Fahrzeugbatterie und/oder Teil eines Fahrzeugtanks sein. Die Montagestruktur 50 kann zweckmäßig an nur einen einzigen Anschlussknoten K3, K4 montiert sein oder aber z. B. mittels Überbrückung der Schnittstelle der benachbarten Anschlussknoten K3, K4 an beide, z. B. um die Struktursteifigkeit der benachbarten Anschlussknoten K3, K4 zu erhöhen.

Die Anbindungsstrukturen 21, 22 können im Wesentlichen in Querrichtung Q und/oder in Höhenrichtung H der Fahrzeugkonstruktion 100 ausgerichtet sein und vorzugsweise zumindest ein Montageloch umfassen.

Im Einsatz der Fahrzeugkonstruktion 100 wird die Fahrzeugkonstruktion 100 in deren Höhenrichtung H üblicherweise auf- und ab-bewegt, wodurch in den Tragstrukturen T3, T4 und zwar insbesondere in den Längsträgersegmenten 3.1 bis 3.4 und 4.1 bis 4.4 Zug- und Druckkräfte erzeugt werden.

Zur Übertragung von im Einsatz der Fahrzeugkonstruktion 100 erzeugten Druckkräften in den Längsträgersegmenten 3.1 bis 3.4 und 4.1 bis 4.4 können die benachbarten Anschlussknoten K3, K4 innenliegende Stirnseiten 15 und 16 aufweisen, die zweckmäßig auf Stoß aneinander liegen können und tragstrukturell miteinander in Verbindung bringbar sind.

Zur Übertragung von im Einsatz der Fahrzeugkonstruktion 100 erzeugten Zugkräften in den Längsträgersegmenten 3.1 bis 3.4 und 4.1 bis 4.4 dienen insbesondere die Spannelemente 12. Die Spannelemente 12 sind somit vorzugsweise tragstruktureller Teil der Längsträgersegmente 3.1 bis 3.4 und 4.1 bis 4.4 und folglich tragstruktureller Teil der Chassis-Längsträgerkonstruktion(en).

Zur Übertragung von im Einsatz der Fahrzeugkonstruktion 100 erzeugten Schubkräften in Höhenrichtung H der Fahrzeugkonstruktion 100 dienen insbesondere die miteinander verbundenen Hülsen 10, 11.

Es ist möglich, dass die Längsträgersegmente, Querträgersegmente und/oder Vertikalträgersegmente z. B. auch zweckmäßig schräg und somit nicht rechtwinklig zum Koordinatensystem L-Q-H verlaufen können. Es ist möglich, dass die Anschlussknoten z. B. lösbar an Längsträgersegmente, Querträgersegmente und/oder Vertikalträgersegmente der jeweiligen Tragstruktur zweckmäßig anmontiert sein können und somit z. B. Einzelbauteile darstellen können. Alternativ oder ergänzend ist es möglich, dass die Anschlussknoten z. B. unlösbar (z. B. einstückig-integral und/oder durch eine Schweißverbindung etc.) an Längsträgersegmenten, Querträgersegmenten und/oder Vertikalträgersegmenten der jeweiligen Tragstruktur zweckmäßig ausgebildet sein können und somit z. B. die Anschlussknoten und die Längsträgersegmente, die Querträgersegmente und/oder die Vertikalträgersegmente ein (z. B. im Wesentlichen knochenförmiges) Einzelbauteil bilden können. Im Kontext der Erfindung kann z. B. an einem ersten (zweckmäßig inneren) Knoten ein Stabelement (z. B. ähnlich einer Schraube, vorzugsweise mit Gewinde) ausgebildet sein, z. B. angegossen oder angeschmiedet sein. Außenseitig kann z. B. ein Gewinde ausgebildet sein und ein zweiter (zweckmäßig äußerer) Knoten kann zweckmäßig mit dem Stabelement verbunden werden.

### Bezugszeichenliste

- 1: Vorderachsmodul

- 2: Hinterachsmodul

- T3: Tragstruktur
- 3.1 bis 3.4: Längsträgersegmente
- 3.5 bis 3.8: Querträgersegmente
- 3.9 bis 3.12: Vertikalträgersegmente
- K3: Anschlussknoten

- T4: Tragstruktur
- 4.1 bis 4.4: Längsträgersegmente
- 4.5 bis 4.8: Querträgersegmente
- 4.9 bis 4.12: Vertikalträgersegmente
- 4.13: Diagonalverstrebung, insbesondere Diagonalträgersegment
- K4: Anschlussknoten

- 5: Modul zur Aufnahme einer Nutzfahrzeug-Kabine

- 10: Hülse
- 11: Hülse
- 12: Spannelement
- 15: Stirnseite
- 16: Stirnseite
- 19: Anschlusseinrichtung
- 20: Anschlusseinrichtung
- 21: Anbindungsstruktur
- 22: Anbindungsstruktur

- 50: Montagestruktur, z. B. eines Fahrzeugaufbaus, einer Fahrzeugbatterie und/oder eines Fahrzeugtanks

- L: Längsrichtung der Fahrzeugkonstruktion
- Q: Querrichtung der Fahrzeugkonstruktion
- H: Höhenrichtung der Fahrzeugkonstruktion

- 100: Fahrzeugkonstruktion

## Patentansprüche

1. Fahrzeugkonstruktion (100), vorzugsweise modular aufgebautes Fahrzeug-Chassis (100), mit zumindest zwei Tragstrukturen (T3, T4), die jeweils zumindest einen Anschlussknoten (K3, K4) aufweisen, **dadurch gekennzeichnet, dass** die Tragstrukturen (T3, T4) benachbarte Anschlussknoten (K3, K4) aufweisen und die benachbarten Anschlussknoten (K3, K4) über zumindest eine Verbindungskonstruktion miteinander verbunden sind und die Verbindungskonstruktion miteinander verbundene Hülsen (10,11) und ein im Wesentlichen in Längsrichtung (L) der Fahrzeugkonstruktion (100) erstreckendes Spannelement (12) aufweist, wobei das Spannelement (12) sich durch die miteinander verbundenen Hülsen (10,11) erstreckt und die benachbarten Anschlussknoten (K3, K4) zueinander hin beaufschlagt und/oder im Wesentlichen in Längsrichtung (L) der Fahrzeugkonstruktion (100) zueinander hin beaufschlagt.

2. Fahrzeugkonstruktion (100) nach Anspruch 1, **dadurch gekennzeichnet, dass** die miteinander verbundenen Hülsen (10, 11) einen Form- und/oder Reibschluss miteinander bilden.

3. Fahrzeugkonstruktion (100) nach einem der vorhergehenden Ansprüche, **dadurch gekennzeichnet, dass** die miteinander verbundenen Hülsen (10, 11) einen Formschluss zwischen den benachbarten Anschlussknoten (K3, K4) bilden, vorzugsweise im Wesentlichen in Höhenrichtung (H) der Fahrzeugkonstruktion (100).

4. Fahrzeugkonstruktion (100) nach einem der vorhergehenden Ansprüche, **dadurch gekennzeichnet, dass** die benachbarten Anschlussknoten (K3, K4) jeweils zumindest eine Aussparung aufweisen, in die jeweils die Hülse (10,11) oder zumindest eine der miteinander verbundenen Hülsen (10,11) eingepresst ist.

5. Fahrzeugkonstruktion (100) nach einem der vorhergehenden Ansprüche, **dadurch gekennzeichnet, dass**
- die Hülse (10,11) abschnittsweise in beiden benachbarten Anschlussknoten (K3, K4) angeordnet ist, oder
- eine der miteinander verbundenen Hülsen (10, 11) abschnittsweise in beiden benachbarten Anschlussknoten (K3, K4) angeordnet ist, oder
- beide der miteinander verbundenen Hülsen (10, 11) abschnittsweise in beiden benachbarten Anschlussknoten (K3, K4) angeordnet sind.

6. Fahrzeugkonstruktion (100) nach einem der vorhergehenden Ansprüche, **dadurch gekennzeichnet, dass** die miteinander verbunden Hülsen (10, 11) sich abschnittsweise überlappen, koaxial angeordnet sind, und/oder ineinander gesteckt sind.

7. Fahrzeugkonstruktion (100) nach einem der vorhergehenden Ansprüche, **dadurch gekennzeichnet, dass** das Spannelement (12), die Hülse (10, 11) und/oder die miteinander verbundenen Hülsen (10, 11) sich im Wesentlichen in Längsrichtung (L) der Fahrzeugkonstruktion (100) erstreckt.

8. Fahrzeugkonstruktion (100) nach einem der vorhergehenden Ansprüche, **dadurch gekennzeichnet, dass** die benachbarten Anschlussknoten (K3, K4) über zumindest zwei Verbindungskonstruktionen miteinander verbunden sind.

9. Fahrzeugkonstruktion (100) nach einem der vorhergehenden Ansprüche, **dadurch gekennzeichnet, dass** die benachbarten Anschlussknoten (K3, K4) innenliegende Stirnseiten (15, 16) aufweisen und die innenliegenden Stirnseiten (15, 16) tragstrukturell miteinander in Verbindung bringbar sind, zur Übertragung von im Einsatz der Fahrzeugkonstruktion (100) erzeugten Druckkräften.

10. Fahrzeugkonstruktion (100) nach einem der vorhergehenden Ansprüche, **dadurch gekennzeichnet, dass** das Spannelement (12) zur Übertragung von im Einsatz der Fahrzeugkonstruktion (100) erzeugten Zugkräften dient.

11. Fahrzeugkonstruktion (100) nach einem der vorhergehenden Ansprüche, **dadurch gekennzeichnet, dass** die Hülse (10,11) oder die miteinander verbundenen Hülsen (10, 11) zur Übertragung von im Einsatz der Fahrzeugkonstruktion (100) erzeugten Kräften im Wesentlichen in Höhenrichtung (H) der Fahrzeugkonstruktion (100) dienen.

12. Fahrzeugkonstruktion (100) nach einem der vorhergehenden Ansprüche, **dadurch gekennzeichnet, dass** die benachbarten Anschlussknoten (K3, K4) jeweils zumindest eine Anschlusseinrichtung (19, 20) zum Anschließen eines Längsträgersegments (3.1-3.4, 4.1-4.4) und vorzugsweise eines Querträgersegments (3.5-3.8, 4.5-4.8) und/oder eines Vertikalträgersegments (3.9-3.12, 4.9-4.12) aufweisen.

13. Fahrzeugkonstruktion (100) nach einem der vorhergehenden Ansprüche, **dadurch gekennzeichnet, dass** die Tragstrukturen (T3, T4) jeweils ein Fahrzeug-Chassis-Modul bilden.

14. Fahrzeugkonstruktion (100) nach einem der vorhergehenden Ansprüche, **dadurch gekennzeichnet, dass** die Längsträgersegmente (3.1-3.4, 4.1-4.4) der Tragstrukturen (T3, T4) über benachbarte Anschlussknoten (K3, K4) miteinander verbunden sind und im Wesentlichen in Querrichtung (Q) der Fahrzeugkonstruktion (100) voneinander beabstandete Chassis-Längsträgerkonstruktionen bilden.

15. Fahrzeugkonstruktion (100) nach einem der vorhergehenden Ansprüche, **dadurch gekennzeichnet, dass** die Tragstrukturen (T3, T4) über jeweils vier Anschlussknoten-Paare (K3, K4) lösbar miteinander verbunden sind und vorzugsweise zumindest zwei der Anschlussknoten-Paare (K3, K4) über die Verbindungskonstruktion miteinander verbunden sind.

16. Fahrzeugkonstruktion (100) nach einem der vorhergehenden Ansprüche, **dadurch gekennzeichnet, dass** die benachbarten Anschlussknoten (K3, K4) jeweils zumindest eine Anbindungsstruktur (21, 22) zur Anbindung einer Montagestruktur (50) eines Fahrzeugaufbaus und/oder zur Anbindung einer Montagestruktur (50) einer Fahrzeugbatterie oder eines Fahrzeugtanks umfasst.

17. Fahrzeugkonstruktion (100) nach Anspruch 16, **dadurch gekennzeichnet, dass** die Montagestruktur (50, 51) an beide benachbarte Anschlussknoten (K3, K4) montiert ist und/oder das Spannelement (12) überbrückt.

18. Fahrzeugkonstruktion (100) nach Anspruch 16 oder 17, **dadurch gekennzeichnet, dass** zumindest eine Anbindungsstruktur (21, 22) im Wesentlichen in Querrichtung (Q) und/oder Höhenrichtung (H) der Fahrzeugkonstruktion (100) ausgerichtet ist und vorzugsweise zumindest ein Montageloch umfasst.

19. Nutzfahrzeug, vorzugsweise Lastkraftwagen, mit einer Fahrzeugkonstruktion (100) nach einem der vorhergehenden Ansprüche.

## Claims

1. A vehicle construction (100), preferably vehicle chassis (100) of modular construction, having at least two supporting structures (T3, T4) which each have at least one connector node (K3, K4), **characterized in that** the supporting structures (T3, T4) have adjacent connector nodes (K3, K4) and the adjacent connector nodes (K3, K4) are connected to one another via at least one connecting construction, and the connecting construction has sleeves (10, 11) connected to one another and a clamping element (12) extending substantially in a longitudinal direction (L) of the vehicle construction (100), wherein the clamping element (12) extends through the sleeves (10, 11) which are connected to one another and loads the adjacent connector nodes (K3, K4) towards one another and/or loads them towards one another substantially in a longitudinal direction (L) of the vehicle construction (100).

2. The vehicle construction (100) according to Claim 1, **characterized in that** the sleeves (10, 11) which are connected to one another form a form fit and/or frictional fit.

3. The vehicle construction (100) according to either of the preceding claims, **characterized in that** the sleeves (10, 11) which are connected to one another form a form fit between the adjacent connector nodes (K3, K4), preferably substantially in a height direction (H) of the vehicle construction (100).

4. The vehicle construction (100) according to one of the preceding claims, **characterized in that** the adjacent connector nodes (K3, K4) each have at least one recess into which the sleeve (10, 11) or at least one of the sleeves (10, 11) which are connected to one another is in each case pressed.

5. The vehicle construction (100) according to one of the preceding claims, **characterized in that**
- the sleeve (10, 11) is sectionally arranged in the two adjacent connector nodes (K3, K4), or
- one of the sleeves (10, 11) which are connected to one another is sectionally arranged in the two adjacent connector nodes (K3, K4), or
- both of the sleeves (10, 11) which are connected to one another are sectionally arranged in the two adjacent connector nodes (K3, K4).

6. The vehicle construction (100) according to one of the preceding claims, **characterized in that** the sleeves (10, 11) which are connected to one another sectionally overlap, are arranged coaxially and/or are inserted into one another.

7. The vehicle construction (100) according to one of the preceding claims, **characterized in that** the clamping element (12), the sleeve (10, 11) and/or the sleeves (10, 11) which are connected to one another extends/extend substantially in a longitudinal direction (L) of the vehicle construction (100).

8. The vehicle construction (100) according to one of the preceding claims, **characterized in that** the two adjacent connector nodes (K3, K4) are connected to one another via at least two connecting constructions.

9. The vehicle construction (100) according to one of the preceding claims, **characterized in that** the adjacent connector nodes (K3, K4) have inner end faces (15, 16), and the inner end faces (15, 16) are able to be brought into connection with one another in supporting-structure-related terms and serve for transmission of compressive forces generated during the use of the vehicle construction (100).

10. The vehicle construction (100) according to one of the preceding claims, **characterized in that** the clamping element (12) serves for transmission of tensile forces generated during the use of the vehicle construction (100).

11. The vehicle construction (100) according to one of the preceding claims, **characterized in that** the sleeve (10, 11) or the sleeves (10, 11) which are connected to one another serve for transmission of forces generated during the use of the vehicle construction (100) substantially in a height direction (H) of the vehicle construction (100).

12. Vehicle construction (100) according to one of the preceding claims, **characterized in that** the adjacent connector nodes (K3, K4) each have at least one connector device (19, 20) for connection of a longitudinal member segment (3.1-3.4, 4.1-4.4) and preferably a transverse member segment (3.5-3.8, 4.5-4.8) and/or a vertical member segment (3.9-3.12, 4.9-4.12) .

13. The vehicle construction (100) according to one of the preceding claims, **characterized in that** the supporting structures (T3, T4) each form a vehicle-chassis module.

14. The vehicle construction (100) according to one of the preceding claims, **characterized in that** the longitudinal member segments (3.1-3.4, 4.1-4.4) of the supporting structures (T3, T4) are connected to one another via adjacent connector nodes (K3, K4) and form chassis longitudinal member constructions which are spaced apart from one another substantially in a transverse direction (Q) of the vehicle construction (100).

15. The vehicle construction (100) according to one of the preceding claims, **characterized in that** the supporting structures (T3, T4) are releasably connected to one another via in each case four pairs of connector nodes (K3, K4), and preferably at least two of the pairs of connector nodes (K3, K4) are connected to one another via the connecting construction.

16. The vehicle construction (100) according to one of the preceding claims, **characterized in that** the adjacent connector nodes (K3, K4) each comprise at least one attachment structure (21, 22) for attachment of a mounting structure (50) of a vehicle body and/or for attachment of a mounting structure (50) of a vehicle battery or of a vehicle tank.

17. The vehicle construction (100) according to Claim 16, **characterized in that** the mounting structure (50, 51) is mounted on both adjacent connector nodes (K3, K4) and/or bridges the clamping element (12).

18. The vehicle construction (100) according to Claim 16 or 17, **characterized in that** at least one attachment structure (21, 22) is oriented substantially in a transverse direction (Q) and/or height direction (H) of the vehicle construction (100) and preferably comprises at least one mounting hole.

19. A utility vehicle, preferably a lorry, having a vehicle construction (100) according to one of the preceding claims.

## Revendications

1. Construction de véhicule (100), de préférence châssis de véhicule (100) construit de manière modulaire, avec au moins deux structures porteuses (T3, T4) qui présentent chacune au moins un noeud de raccordement (K3, K4), **caractérisée en ce que** les structures porteuses (T3, T4) présentent des noeuds de raccordement (K3, K4) voisins et les noeuds de raccordement (K3, K4) voisins sont reliés entre eux par l'intermédiaire d'au moins une construction de liaison et la construction de liaison présente des manchons (10, 11) reliés entre eux et un élément de serrage (12) s'étendant essentiellement dans la direction longitudinale (L) de la construction de véhicule (100), l'élément de serrage (12) s'étendant à travers les manchons (10, 11) reliés entre eux et sollicitant les noeuds de raccordement (K3, K4) voisins l'un vers l'autre et/ou les sollicitant l'un vers l'autre essentiellement dans la direction longitudinale (L) de la construction de véhicule (100).

2. Construction de véhicule (100) selon la revendication 1, **caractérisée en ce que** les manchons (10, 11) reliés entre eux forment une liaison par complémentarité de forme et/ou par friction.

3. Construction de véhicule (100) selon l'une quelconque des revendications précédentes, **caractérisée en ce que** les manchons (10, 11) reliés entre eux forment une liaison par complémentarité de forme entre les noeuds de raccordement (K3, K4) voisins, de préférence essentiellement dans la direction de la hauteur (H) de la construction de véhicule (100).

4. Construction de véhicule (100) selon l'une quelconque des revendications précédentes, **caractérisée en ce que** les noeuds de raccordement (K3, K4) voisins présentent chacun au moins un évidement dans lequel est pressé respectivement le manchon (10, 11) ou au moins l'un des manchons (10, 11) reliés entre eux.

5. Construction de véhicule (100) selon l'une quelconque des revendications précédentes, **caractérisée en ce que**
- le manchon (10, 11) est agencé par sections dans les deux noeuds de raccordement (K3, K4) voisins, ou
- l'un des manchons (10, 11) reliés entre eux est agencé par sections dans les deux noeuds de raccordement (K3, K4) voisins, ou
- les deux manchons (10, 11) reliés entre eux sont agencés par sections dans les deux noeuds de raccordement (K3, K4) voisins.

6. Construction de véhicule (100) selon l'une quelconque des revendications précédentes, **caractérisée en ce que** les manchons (10, 11) reliés entre eux se chevauchent par sections, sont agencés coaxialement et/ou sont emboîtés l'un dans l'autre.

7. Construction de véhicule (100) selon l'une quelconque des revendications précédentes, **caractérisée en ce que** l'élément de serrage (12), le manchon (10, 11) et/ou les manchons (10, 11) reliées entre eux s'étendent essentiellement dans la direction longitudinale (L) de la construction de véhicule (100).

8. Construction de véhicule (100) selon l'une quelconque des revendications précédentes, **caractérisée en ce que** les noeuds de raccordement (K3, K4) voisins sont reliés entre eux par l'intermédiaire d'au moins deux structures de liaison.

9. Construction de véhicule (100) selon l'une quelconque des revendications précédentes, **caractérisée en ce que** les noeuds de raccordement (K3, K4) voisins présentent des côtés frontaux intérieurs (15, 16) et les côtés frontaux intérieurs (15, 16) peuvent être mis en liaison entre eux de manière structurellement porteuse, pour transmettre des forces de pression générées lors de l'utilisation de la construction de véhicule (100).

10. Construction de véhicule (100) selon l'une quelconque des revendications précédentes, **caractérisée en ce que** l'élément de serrage (12) sert à transmettre des forces de traction générées lors de l'utilisation de la construction de véhicule (100).

11. Construction de véhicule (100) selon l'une quelconque des revendications précédentes, **caractérisée en ce que** le manchon (10, 11) ou les manchons (10, 11) reliés entre eux servent à transmettre des forces générées lors de l'utilisation de la construction de véhicule (100), essentiellement dans la direction de la hauteur (H) de la construction de véhicule (100).

12. Construction de véhicule (100) selon l'une quelconque des revendications précédentes, **caractérisée en ce que** les noeuds de raccordement (K3, K4) voisins présentent chacun au moins un dispositif de raccordement (19, 20) pour le raccordement d'un segment de support longitudinal (3.1-3.4, 4.1-4.4) et de préférence d'un segment de support transversal (3.5-3.8, 4.5-4.8) et/ou d'un segment de support vertical (3.9-3.12, 4.9-4.12).

13. Construction de véhicule (100) selon l'une quelconque des revendications précédentes, **caractérisée en ce que** les structures porteuses (T3, T4) forment chacune un module de châssis de véhicule.

14. Construction de véhicule (100) selon l'une quelconque des revendications précédentes, **caractérisée en ce que** les segments de support longitudinal (3.1-3.4, 4.1-4.4) des structures porteuses (T3, T4) sont reliés entre eux par des noeuds de raccordement (K3, K4) voisins et forment des constructions de support longitudinal de châssis espacées les unes des autres, essentiellement dans la direction transversale (Q) de la construction de véhicule (100).

15. Construction de véhicule (100) selon l'une quelconque des revendications précédentes, **caractérisée en ce que** les structures porteuses (T3, T4) sont reliées entre elles de manière amovible respectivement par l'intermédiaire de quatre paires de noeuds de raccordement (K3, K4) et, de préférence, au moins deux des paires de noeuds de raccordement (K3, K4) sont reliées entre elles par l'intermédiaire de la construction de liaison.

16. Construction de véhicule (100) selon l'une quelconque des revendications précédentes, **caractérisée en ce que** les noeuds de raccordement (K3, K4) voisins comprennent chacun au moins une structure d'attache (21, 22) pour attacher une structure de montage (50) d'une carrosserie de véhicule et/ou pour attacher une structure de montage (50) d'une batterie de véhicule ou d'un réservoir de véhicule.

17. Construction de véhicule (100) selon la revendication 16, **caractérisée en ce que** la structure de montage (50, 51) est montée sur les deux noeuds de raccordement (K3, K4) voisins et/ou ponte l'élément de serrage (12).

18. Construction de véhicule (100) selon la revendication 16 ou 17, **caractérisée en ce qu'**au moins une structure d'attache (21, 22) est orientée essentiellement dans la direction transversale (Q) et/ou la direction de la hauteur (H) de la construction de véhicule (100) et comprend de préférence au moins un trou de montage.

19. Véhicule utilitaire, de préférence camion, avec une construction de véhicule (100) selon l'une quelconque des revendications précédentes.
